# EUROPEAN PATENT APPLICATION

(11) **EP 4 576 903 A1**
(43) Date of publication of application: **25.06.2025**
(21) Application number: 23862469.6
(22) Date of filing: 07.09.2023
(51) Int. Cl.: H04W 72/0446

(54) **COMMUNICATION METHOD AND COMMUNICATION APPARATUS**

(30) Priority: 09.09.2022 CN 202211105828
(71) Applicant: Huawei Technologies Co., Ltd., Shenzhen, Guangdong 518129 (CN)
(72) Inventor: LIN, Yunlong, Shenzhen, Guangdong 518129 (CN); TAN, Ting, Shenzhen, Guangdong 518129 (CN); DING, Suying, Shenzhen, Guangdong 518129 (CN); PU, Song, Shenzhen, Guangdong 518129 (CN)
(74) Representative: Pfenning, Meinig & Partner mbB
(86) International application number: PCT/CN2023/117457
(87) International publication number: WO 2024/051775

(57) **Abstract**

Embodiments of this application provide a communication method and a communication apparatus. The method includes: An access network device determines first information when remote interference is detected, where the first information is used to configure a time domain resource of an SRS to be migrated from a first time domain resource to a second time domain resource, and strength of remote interference on the second time domain resource is less than strength of remote interference on the first time domain resource; and the access network device sends the first information to a terminal. Based on the foregoing method, when the remote interference is detected, the access network device may migrate an important SRS to a location with low interference, and reduce remote interference to the SRS. After interference to an SRS channel is reduced, a BF beam can be more accurate, to help improve a beam signal-to-noise ratio of the terminal, improve performance such as a downlink throughput, and reduce impact of the remote interference on uplink transmission of the access network device.

## Description

This application claims priority to Chinese Patent Application No. 202211105828.4, filed on September 9, 2022 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

An atmospheric duct is a natural phenomenon that occurs in specific weather and geographical conditions. In the troposphere of the earth's atmosphere, there is a layer in which a temperature inversion occurs or water vapor decreases sharply with height. In this layer, super-refraction propagation of electromagnetic waves may occur, and most electromagnetic wave radiation is limited within this layer. This is similar to electromagnetic wave propagation in a duct. The atmospheric duct usually occurs in a boundary atmosphere below a height of 300 m. A propagation loss of electromagnetic waves in the atmospheric duct is very small. Therefore, the electromagnetic waves can be propagated over an ultra-long distance, and a propagation distance of the electromagnetic waves is far greater than a normal radiation range.

In a time division duplex (time division duplex, TDD) system, an uplink signal and a downlink signal are time division multiplexed, and a guard period (guard period, GP) is set to avoid interference of the downlink signal to the uplink signal. A downlink direction is from a base station to a terminal, and a transmitted signal is a downlink signal; and an uplink direction is from the terminal to the base station, and a transmitted signal is an uplink signal.

When the atmospheric duct occurs, a downlink signal of a remote base station still has high strength after being transmitted over an ultra-long distance of dozens of or hundreds of kilometers. A propagation delay of the downlink signal exceeds duration of a guard period, and falls into a receive window of an uplink signal of a local base station. The downlink signal of the remote base station causes severe interference to the uplink signal of the local base station. The interference may be referred to as remote interference.

Therefore, how to reduce impact of the remote interference on the uplink signal of the local

### SUMMARY

This application provides a communication method and a communication apparatus, to help reduce interference.

According to a first aspect, a communication method is provided. The method may be performed by an access network device, or may be performed by a module or a unit in the access network device. For ease of description, the module or the unit is collectively referred to as an access network device below.

The method includes:
The access network device determines first information when remote interference is detected, where the first information is used to configure a time domain resource of a sounding reference signal SRS to be migrated from a first time domain resource to a second time domain resource, and strength of remote interference on the second time domain resource is less than strength of remote interference on the first time domain resource; and the access network device sends the first information to a terminal.

Based on the foregoing method, when the remote interference is detected, the access network device may migrate an important sounding reference signal (sounding reference signal, SRS) to a location with low interference, and remote interference to the SRS is reduced, and after interference to an SRS channel is reduced, a BF beam can be more accurate, to help improve a beam signal-to-noise ratio of the terminal, improve performance such as a downlink throughput, and reduce impact of the remote interference on uplink transmission of the access network device.

With reference to the first aspect, in a possible implementation, before that the access network device sends the first information to the terminal, the method further includes: The access network device sets a first cell in which the terminal is located to a barred barred state; and the access network device migrates all terminals in the first cell to a second cell. That the access network device sends the first information to the terminal includes: The access network device sends the first information to the terminal when the terminal re-accesses the first cell.

Different terminals may correspond to a same second cell or different second cells.

In an existing remote interference avoidance technology, there is no method for dynamically adjusting an SRS channel and another channel based on interference, and configuration adjustment may be performed based only on a channel structure. In addition, for network channel adjustment, in the conventional technology, two channel structures cannot coexist in a same cell, and a new cell needs to be established after cell resources are deleted as a whole to achieve a purpose of adjusting the channel structure. Based on the foregoing method, a channel may be adjusted online after user migration, and then a solution in which a user is automatically migrated back based on mobility is used, so that the channel is dynamically adjusted online based on interference, to avoid remote interference.

With reference to the first aspect or any implementation of the first aspect, in another possible implementation, the second cell is a neighboring cell of the first cell, and/or the second cell and the first cell are cells of different standards.

With reference to the first aspect or any implementation of the first aspect, in another possible implementation, a 1^{st} symbol of the second time domain resource is adjacent to a last symbol of a third time domain resource used for transmission of a physical uplink shared channel (physical uplink shared channel, PUSCH), the 1^{st} symbol of the second time domain resource is used for transmission of a first SRS, and the first SRS is an SRS for which an antenna is not switched when the terminal switches from the PUSCH to the first SRS.

Based on the foregoing method, when the second time domain resource is adjacent to the third time domain resource used for transmission of the physical uplink shared channel PUSCH, the access network device may preferentially allocate, on the 1^{st} symbol (also referred to as an initial symbol) that is of the second time domain resource and that is adjacent to the third time domain resource, the SRS that does not require antenna switching, to avoid reserving antenna switching time, and reduce resource overheads.

With reference to the first aspect or any implementation of the first aspect, in another possible implementation, the first SRS is used to determine a codebook (codebook, CB)-based PUSCH transmission mode.

With reference to the first aspect or any implementation of the first aspect, in another possible implementation, the method further includes: The access network device sends second information to the terminal based on strength of remote interference on a fourth time domain resource, where the second information is used to schedule the fourth time domain resource, and the fourth time domain resource includes the first time domain resource and guard period symbols in a slot in which the first time domain resource is located.

Based on the foregoing method, the access network device may transmit the PUSCH by using the fourth time domain resource based on the strength of the remote interference, to help improve PUSCH resources utilization and improve uplink performance.

With reference to the first aspect or any implementation of the first aspect, in another possible implementation, the first time domain resource is after the guard period symbol. When strength of remote interference on a last symbol in the guard period symbols is greater than a preset threshold, the second information is used to schedule the terminal to skip transmission of a physical uplink shared channel PUSCH on the first time domain resource and the guard period symbol; when strength of remote interference on a last symbol in the guard period symbols is less than a preset threshold, and strength of remote interference on a first symbol in the guard period symbols is greater than the preset threshold, the second information is used to schedule the terminal for transmission of a PUSCH on the first time domain resource and skip transmission of a PUSCH on the guard period symbol; or when strength of remote interference on a first symbol in the guard period symbols is less than a preset threshold, the second information is used to schedule the terminal for transmission of a PUSCH on the first time domain resource and a symbol after a 2^{nd} symbol in the guard period symbols.

Based on the foregoing method, the access network device may flexibly adjust, based on the strength of the remote interference, a resource that may be used for transmission of a PUSCH and that is in the fourth time domain resource, so that an uplink resource can be used to the maximum extent, to improve PUSCH resources utilization and improve uplink performance.

With reference to the first aspect or any implementation of the first aspect, in another possible implementation, the method further includes: The access network device sends second information to the terminal based on a distance between the terminal and the access network device, where the second information is used to schedule a fourth time domain resource, and the fourth time domain resource includes the first time domain resource and guard period symbols in a slot in which the first time domain resource is located.

Remote interference has greatest impact on a far-point user and smallest impact on a near-point user. Based on the foregoing method, the access network device may transmit the PUSCH by using the fourth time domain resource based on the distance between the terminal and the access network device, to help improve PUSCH resources utilization and improve uplink performance.

With reference to the first aspect or any implementation of the first aspect, in another possible implementation, when the terminal is a near-point terminal, the second information is used to schedule the terminal for transmission of a physical uplink shared channel PUSCH on the first time domain resource and a part of the guard period symbols; when the terminal is a midpoint terminal, the second information is used to schedule the terminal for transmission of a PUSCH on the first time domain resource and skip transmission of a PUSCH on the guard period symbol; or when the terminal is a far-point terminal, the second information is used to schedule the terminal to skip transmission of a PUSCH on the first time domain resource and the guard period symbol.

Based on the foregoing method, the access network device may flexibly adjust, based on the distance between the terminal and the access network device, the resource that may be used for transmission of a PUSCH and that is in the fourth time domain resource, so that an uplink resource can be used to the maximum extent, to improve PUSCH resources utilization and improve uplink performance.

With reference to the first aspect or any implementation of the first aspect, in another possible implementation, the method further includes: The access network device determines the second information based on strength of remote interference on the fourth time domain resource.

According to a second aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a communication unit.

In an implementation, the apparatus is an access network device. When the apparatus is the access network device, the communication unit may be a transceiver, or an input/output interface, or a communication interface; and the processing unit may be at least one processor. Optionally, the transceiver is a transceiver circuit. Optionally, the input/output interface is an input/output circuit.

In another implementation, the apparatus is a chip, a chip system, or a circuit used in an access network device. When the apparatus is the chip, the chip system, or the circuit used in the access network device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a third aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is an access network device.

In another implementation, the apparatus is a chip, a chip system, or a circuit used in an access network device.

According to a fourth aspect, a communication apparatus is provided. The apparatus includes: at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to a fifth aspect, a processor is provided. The processor is configured to perform the method provided in the foregoing aspects.

Unless otherwise specified, or if operations such as sending and obtaining/receiving related to the processor do not conflict with actual functions or internal logic in related descriptions, the operations may be understood as operations such as output, receiving, and input of the processor, or may be understood as sending and receiving operations performed by a radio frequency circuit and an antenna. This is not limited in this application.

According to a sixth aspect, a computer-readable storage medium is provided. The computer-readable storage medium stores program code to be executed by a device, and the program code is used to perform the method provided in any one of the foregoing aspects or the implementations of the foregoing aspects.

According to a seventh aspect, a computer program product including instructions is provided. When the computer program product runs on a computer, the computer is enabled to perform the method provided in any one of the foregoing aspects or the implementations of the foregoing aspects.

According to an eighth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or instructions. The processor is configured to execute the computer program or the instructions stored in the memory. When the computer program or the instructions are executed, the processor is configured to perform the method provided in any one of the foregoing aspects or the implementations of the foregoing aspects.

According to a ninth aspect, a communication system is provided. The communication system includes the foregoing access network device.

### BRIEF DESCRIPTION OF DRAWINGS

FIG. 1 is a diagram of a network architecture to which an embodiment of this application is applicable;
FIG. 2 is a schematic flowchart of a communication method 200 according to this application;
FIG. 3 is a diagram of interference strength of a GAP/SRS/U symbol in an NR remote interference scenario;
FIG. 4 is a diagram of active remote interference avoidance according to this application;
FIG. 5 is a diagram of channels included in an S slot (slot) and a U slot before and after SRS migration;
FIG. 6 is a diagram of an SRS migration process according to this application;
FIG. 7 is a comparison diagram of downlink throughputs;
FIG. 8 is a diagram of reserving an antenna guard symbol in a conventional solution;
FIG. 9 is a diagram of three configurations of symbols in an S slot;
FIG. 10 is a flowchart of flexibly configuring an original SRS symbol and a G symbol by a base station;
FIG. 11 is a diagram of remote interference to a near-point user and a far-point user;
FIG. 12 is an example of determining a configuration of a symbol in an S slot based on a distance between a user and a base station;
FIG. 13 is a diagram of a structure of an apparatus according to an embodiment of this application; and
FIG. 14 is another diagram of a structure of an apparatus according to an embodiment of this application.

### DESCRIPTION OF EMBODIMENTS

The following describes technical solutions of embodiments in this application with reference to the accompanying drawings.

For ease of understanding of embodiments of this application, before embodiments of this application are described, the following descriptions are first provided.

In this application, the term "indicating" or "indicate" may include a direct indication and an indirect indication, in other words, the term "indicating" or "indicate" may be an explicit indication and/or an implicit indication. For example, when a piece of information is described as indicating information I, the information may directly indicate I or indirectly indicate I, but it does not necessarily indicate that the information carries I. For another example, the implicit indication may be based on a location and/or a resource used for transmission; and the explicit indication may be based on one or more parameters, and/or one or more indexes, and/or one or more bit patterns represented by the explicit indication.

Definitions listed for many features in this application are merely used to explain functions of the features by using examples. For detailed content of the definitions, refer to the conventional technology.

In embodiments of the following, the terms such as "first", "second", "third", "A", "B", "C", and "D" are used to distinguish between technical features in this technical feature. There is no chronological order or no size order between the technical features described by the terms "first", "second", "third", "A", "B", "C", and "D".

"Predefinition" may be implemented by pre-storing corresponding code or a table in a device, or implemented in another manner that may indicate related information. A specific implementation of "predefinition" is not limited in this application. "Storage" may be storage in one or more memories. A type of the memory may be a storage medium in any form. This is not limited in this application.

A "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in this application.

Each aspect, embodiment, or feature is presented in this application with reference to a system including a plurality of devices, components, or modules, or the like. It should be understood and appreciated that, each system may include another device, component, or module, or the like, and/or may not include all devices, components, or modules, or the like discussed with reference to the accompanying drawings. In addition, a combination of these solutions may be used.

In embodiments of this application, the terms such as "example", "for example", "exemplarily", and "in an (another) example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

The terms "comprise", "include", and "have", and their variants all mean "include but are not limited to", unless otherwise specifically emphasized in another manner.

"At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

In embodiments of this application, related descriptions about sending a message, information, or data by a network element A to a network element B, and receiving, by the network element B, the message, the information, or the data from the network element A are intended to describe a network element to which the message, the information, or the data is to be sent. Whether the message, the information, or the data is directly sent or indirectly sent through another network element is not limited.

In embodiments of this application, descriptions such as "when ...", "in a case of ...", and "if" all mean that a device performs corresponding processing in an objective case, and are not limited to time, and the device is not required to perform a determining action in an implementation. This does not mean that there is another limitation.

Embodiments of this application may be applied to various communication systems, for example, a long term evolution (long term evolution, LTE) system, an LTE frequency division duplex (frequency division duplex, FDD) system, an LTE time division duplex (time division duplex, TDD) system, a public land mobile network (public land mobile network, PLMN), a 5th generation (5th generation, 5G) system, a 6th generation (6th generation, 6G) system, or a future communication system. A 5G system in this application includes a non-standalone (non-standalone, NSA) 5G mobile communication system or a standalone (standalone, SA) 5G mobile communication system. Embodiments of this application may be further applied to a non-terrestrial network (non-terrestrial network, NTN) communication system, for example, a satellite communication system. Embodiments of this application may be further applied to a device to device (device to device, D2D) communication system, a sidelink (sidelink, SL) communication system, a machine to machine (machine to machine, M2M) communication system, a machine type communication (machine type communication, MTC) system, an internet of things (Internet of things, IoT) communication system, a vehicle to everything (vehicle to everything, V2X) communication system, an uncrewed aerial vehicle (uncrewed aerial vehicle, UAV) communication system, or another communication system.

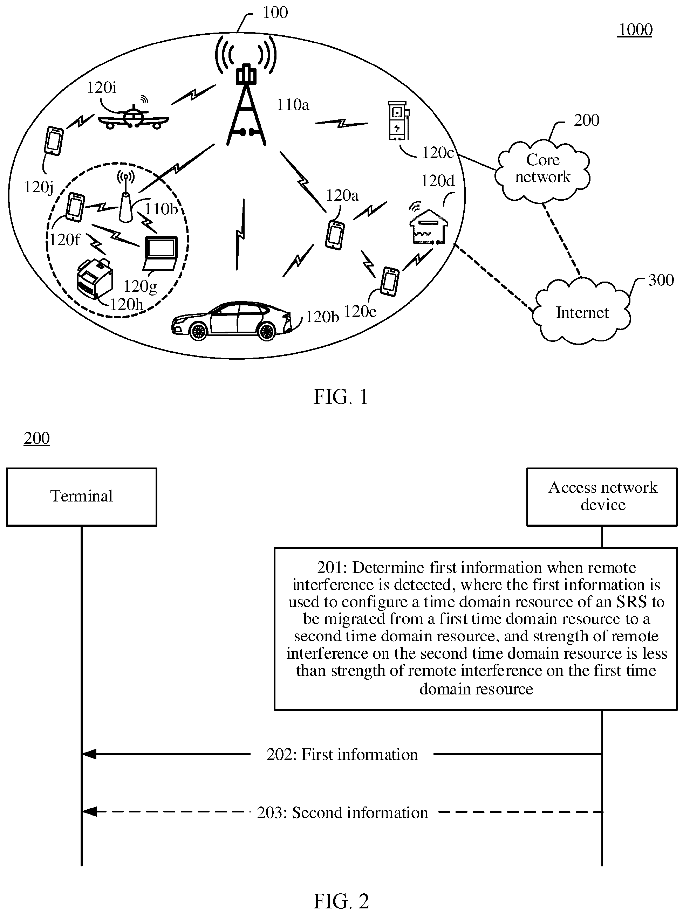

In an example, FIG. 1 is a diagram of a communication system.

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into a physical device. A wired or wireless manner may be used for a connection between terminals and between radio access network devices. FIG. 1 is only a diagram. The communication system may further include other network devices, for example, may further include a wireless relay device and a wireless backhaul device, which are not shown in FIG. 1.

The terminal device in embodiments of this application may also be referred to as a terminal, and may be a device having a wireless transceiver function. The terminal device may be deployed on land, including an indoor device, an outdoor device, a handheld device, or a vehicle-mounted device; or may be deployed on a water surface (for example, on a ship); or may be deployed in the air (for example, on an airplane, a balloon, and a satellite). The terminal device may be user equipment (user equipment, UE). The UE includes a handheld device, a vehicle mounted device, a wearable device, or a computing device having a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of a terminal may be a terminal; or may be an apparatus that can support the terminal in implementing the function, for example, a chip system. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is a terminal and the terminal is UE.

The radio access network device in embodiments of this application is, for example, a base station (base station, BS), and the BS may be a device that is deployed in the radio access network and that can perform wireless communication with the terminal. The radio access network device includes but is not limited to a base station (base station) in the foregoing communication system, an evolved NodeB (evolved NodeB, eNodeB), a transmission reception point (transmission reception point, TRP), a next generation NodeB (next generation NodeB, gNB) in a 5G mobile communication system, a next generation NodeB in a 6th generation (6th generation, 6G) mobile communication system, an access network device in an open access network ORAN (open RAN, ORAN) system, or a module of the access network device, a base station in a future mobile communication system, an access node in a Wi-Fi system, or the like. Alternatively, the access network device may be a module or a unit that may implement some functions of the base station. For example, the access network device may be a central unit (central unit, CU), a distributed unit (distributed unit, DU), a CU-control plane (control plane, CP), a CU-user plane (user plane, UP), or a radio unit (radio unit, RU) described below. In the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU. The access network device may be a macro base station (for example, 110a in FIG. 1), a micro base station or an indoor base station (for example, 110b in FIG. 1), a relay node or a donor node, or a radio controller in a cloud radio access network (cloud radio access network, CRAN) scenario. Optionally, the access network device may alternatively be a server, a wearable device, a vehicle-mounted device, or the like. For example, an access network device in a vehicle to everything (vehicle to everything, V2X) technology may be a roadside unit (roadside unit, RSU). A plurality of access network devices in the communication system may be base stations of a same type, or may be base stations of different types. The base station may communicate with a terminal, or may communicate with the terminal through a relay station. The terminal may communicate with a plurality of base stations in different access technologies. In embodiments of this application, an apparatus configured to implement a function of a radio access network device may be a radio access network device, or may be an apparatus, for example, a chip system, that can support the radio access network device in implementing the function, and the apparatus may be installed in the radio access network device. In the technical solutions provided in embodiments of this application, the technical solutions provided in embodiments of this application are described by using an example in which the apparatus configured to implement the function of the radio access network device is a radio access network device and the radio access network device is a base station.

The technical solutions provided in embodiments of this application are applied to wireless communication between communication devices. The wireless communication between the communication devices may include: wireless communication between a radio access network device and a terminal, wireless communication between radio access network devices, and wireless communication between terminals. In embodiments of this application, the term "wireless communication" may also be referred to as "communication" for short, and the term "communication" may also be described as "data transmission", "information transmission", or "transmission".

As mentioned in the Background, when remote interference occurs, a downlink signal of a remote base station may cause severe interference to an uplink signal of a local base station. A solution for avoiding the remote interference is as follows: When the local base station detects remote interference from the remote base station, the local base station sends a remote interference management reference signal (remote interference management, RIM-RS) 1 to the remote base station; after receiving the RIM-RS 1, the remote base station reduces a quantity of symbols used for downlink, to eliminate interference to the local base station, and sends an RIM-RS 2 to the local base station; and the local base station keeps sending the RIM-RS 1 until no RIM-RS 2 from the remote base station is received. In this way, the remote base station may continuously adjust, based on the RIM-RS 1, a quantity of symbols used for downlink, until the local base station is not affected. It may be learned that the current solution of avoiding the remote interference depends on mutual detection of the RIM-RSs between the remote base station and the local base station, and the remote base station reduces the quantity of symbols sent in downlink, to eliminate impact on the local base station.

For the foregoing solution, first, the foregoing solution strongly depends on coordination of the remote base station and the local base station to enable the mutual detection and identify the remote interference. In cross-country/cross-vendor device scenarios, there is difficulty in negotiation. For example, in a plurality of countries outside China, mutual interference may easily occur. However, spectrum allocation varies, it is difficult to coordinate interests of operators, and interference source detection and avoidance cannot be performed. In addition, in asymmetric and non-reciprocal interference scenarios, a RIM-RS used for interference source detection may not be sent. Consequently, interference source avoidance may not be triggered. In addition, when interference increases, a RIM-RS capacity may be affected by an interference signal. Consequently, the RIM-RS cannot be correctly demodulated, and a probability of detecting an interference source is affected.

For the foregoing problem, this application provides a communication method and a communication apparatus, to reduce impact of remote interference on uplink transmission of an access network device.

The following describes the communication method provided in this application.

FIG. 2 is a schematic flowchart of a communication method 200 according to this application.

The method 200 includes at least a part of the following content.

Step 201: An access network device determines first information when remote interference is detected.

The first information is used to configure a time domain resource of a sounding reference signal (sounding reference signal, SRS) to be migrated from a first time domain resource to a second time domain resource, and strength of remote interference on the second time domain resource is less than strength of remote interference on the first time domain resource.

In other words, when the remote interference is detected, the access network device may migrate the SRS to a time domain resource with low interference or with no interference.

A manner of detecting the remote interference by the access network device is not limited in this application. For example, an interference level and a characteristic of an uplink symbol of the access network device are determined, and if an interference state changes from an interference-free state to an interfered state, an interference characteristic presents a "slope" characteristic, that is, an interference level of a left symbol is higher than an interference level of a right symbol, so that a determining result of remote interference to the access network device is obtained. The detection process may be implemented based on an algorithm in the access network device. Alternatively, whether interference changes may be manually determined based on a statistical result on the uplink symbol.

Step 202: The access network device sends the first information to a terminal.

Correspondingly, the terminal receives the first information sent by the access network device.

In other words, the access network device reconfigures a time domain location of the SRS for the terminal.

Based on the foregoing method, when the remote interference is detected, the access network device may migrate an important SRS to a location with low interference, and reduce remote interference to the SRS. After interference to an SRS channel is reduced, a BF beam can be more accurate, to help improve a beam signal-to-noise ratio of the terminal, improve performance such as a downlink throughput, and reduce impact of the remote interference on uplink transmission of the access network device.

Optionally, in some other implementations of this application, the method 200 may further include: Before the access network device sends the first information to the terminal, the access network device sets a first cell in which the terminal is located to a barred barred state; and migrates all terminals in the first cell to a second cell.

Step 202 includes: The access network device sends the first information to the terminal when the terminal re-accesses the first cell.

In an existing remote interference avoidance technology, there is no method for dynamically adjusting an SRS channel and another channel based on interference, and configuration adjustment may be performed based only on a channel structure. In addition, for network channel adjustment, in the conventional technology, two channel structures cannot coexist in a same cell, and a new cell needs to be established after cell resources are deleted as a whole to achieve a purpose of adjusting the channel structure. Based on the foregoing method, a channel may be adjusted online after user migration, and then a solution in which a user is automatically migrated back based on mobility is used, so that the channel is dynamically adjusted online based on interference, to avoid remote interference.

Optionally, the second cell is a neighboring cell of the first cell, and/or the second cell and the first cell are cells of different standards.

Optionally, a 1^{st} symbol of the second time domain resource is adjacent to a last symbol of a third time domain resource used for transmission of a PUSCH, the 1^{st} symbol of the second time domain resource is used for transmission of a first SRS, and the first SRS is an SRS for which an antenna is not switched when the terminal switches from the PUSCH to the first SRS.

Optionally, the first SRS is used to determine a codebook CB-based PUSCH transmission mode.

Based on the foregoing method, when the second time domain resource is adjacent to the third time domain resource used for transmission of the physical uplink shared channel PUSCH, the access network device may preferentially allocate, on the 1^{st} symbol (also referred to as an initial symbol) that is of the second time domain resource and that is adjacent to the third time domain resource, the SRS that does not require antenna switching, to avoid reserving antenna switching time, and reduce resource overheads.

Optionally, in some other implementations of this application, the method 200 may further include the following step: Step 203: The access network device sends second information to the terminal, where the second information is used to schedule a fourth time domain resource, and the fourth time domain resource includes the first time domain resource and a guard period symbol in a slot in which the first time domain resource is located. In this way, the access network device reuses the fourth time domain resource for transmission of the PUSCH, to help improve PUSCH resources utilization and improve uplink performance.

In a possible implementation, step 203 includes: The access network device sends the second information to the terminal based on strength of remote interference on the fourth time domain resource. In this way, the access network device may transmit the PUSCH by using the fourth time domain resource based on the strength of the remote interference, to help improve PUSCH resources utilization and improve uplink performance.

In an example, the first time domain resource is after the guard period symbol. When strength of remote interference on a last symbol in the guard period symbols is greater than a preset threshold, the second information is used to schedule the terminal to skip transmission of a physical uplink shared channel PUSCH on the first time domain resource and the guard period symbol; when strength of remote interference on a last symbol in the guard period symbols is less than a preset threshold, and strength of remote interference on a first symbol in the guard period symbols is greater than the preset threshold, the second information is used to schedule the terminal for transmission of a PUSCH on the first time domain resource and skip transmission of a PUSCH on the guard period symbol; or when strength of the remote interference on a first symbol in the guard period symbols is less than a preset threshold, the second information is used to schedule the terminal for transmission of a PUSCH on the first time domain resource and a symbol after a 2^{nd} symbol in the guard period symbols. It should be noted that, in the foregoing example, only three levels of utilization of the fourth time domain resource are used as an example, and more or fewer levels may be obtained through division.

Optionally, the first symbol may be any symbol other than the 1^{st} symbol and the last symbol in the guard period symbols.

In this way, the access network device may flexibly adjust, based on the strength of the remote interference, a resource that may be used for transmission of a PUSCH and that is in the fourth time domain resource, so that an uplink resource can be used to the maximum extent, to improve PUSCH resources utilization and improve uplink performance.

Optionally, in some other implementations of this application, the method 200 may further include step 203.

In another possible implementation, step 203 includes: The access network device sends second information to the terminal based on a distance between the terminal and the access network device. Remote interference has greatest impact on a far-point user and smallest impact on a near-point user. Based on the foregoing method, the access network device may transmit the PUSCH by using the fourth time domain resource based on the distance between the terminal and the access network device, to help improve PUSCH resources utilization and improve uplink performance.

In an example, when the terminal is a near-point terminal, the second information is used to schedule the terminal for transmission of a PUSCH on the first time domain resource and a part of the guard period symbols; when the terminal is a midpoint terminal, the second information is used to schedule the terminal for transmission of a PUSCH on the first time domain resource and skip transmission of a PUSCH on the guard period symbols; or when the terminal is a far-point terminal, the second information is used to schedule the terminal to skip transmission of a PUSCH on the first time domain resource and the guard period symbol. It should be noted that, in the foregoing example, only three levels of utilization of the fourth time domain resource are used as an example, and more or fewer levels may be obtained through division.

Based on the foregoing method, the access network device may flexibly adjust, based on the distance between the terminal and the access network device, the resource that may be used for transmission of a PUSCH and that is in the fourth time domain resource, so that an uplink resource can be used to the maximum extent, to improve PUSCH resources utilization and improve uplink performance.

Optionally, before that the access network device sends the second information to the terminal based on the distance between the terminal and the access network device, the method 200 further includes: The access network device determines the second information based on strength of remote interference on the fourth time domain resource.

The following describes the communication method in this application with reference to a specific scenario. In the following, a GAP symbol or a G symbol represents a guard period symbol, a U symbol represents an uplink symbol, and a D symbol represents a downlink symbol. Interference may be remote interference, and a base station may correspond to the foregoing access network device.

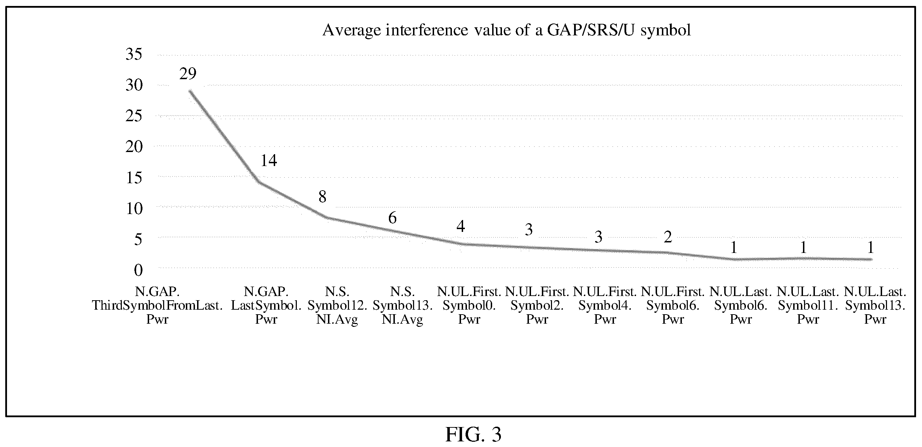

This application is mainly to resolve a problem of how to actively avoid interference through interference identification at an interfered end in a remote interference scenario when interference avoidance is performed without relying on mutual detection of two parties, and design a manner of dynamically migrating an SRS based on interference; and resolve a problem of how the interfered end identifies and dynamically adjusts a channel location of an SRS based on interference, and how to provide a solution of coordinating with another channel based on an optimized SRS channel location. FIG. 3 is a diagram of interference strength of a GAP/SRS/U symbol in an NR remote interference scenario. As shown in FIG. 3, an S slot (slot) is most vulnerable to interference, and is subject to greatest interference impact.

In this application, through remote interference identification, an SRS is dynamically migrated to a location far away from interference, and a GAP symbol in the S slot and an original SRS symbol are dynamically used for PUSCH scheduling based on an interference level of the S slot.

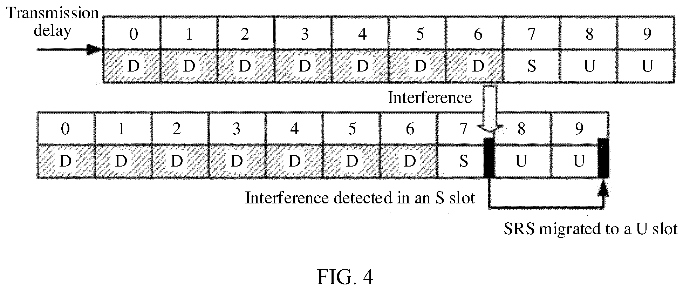

The following describes in detail the communication method in the foregoing embodiment in FIG. 2 with reference to specific embodiments in FIG. 4 to FIG. 12. Steps in the embodiments in FIG. 4 to FIG. 12 and the embodiment in FIG. 2 may also be mutually referenced, and terms and concepts may also be mutually referenced.

FIG. 4 is a diagram of active remote interference avoidance according to this application.

As shown in FIG. 4, D slots 5 and 6 of a remote base station may interfere with an S slot of a local base station. In this case, the local base station may migrate an SRS from an original S slot to a U slot 9, to avoid interference of the D slots 5 and 6 of the remote base station to the SRS. It should be noted that FIG. 4 presents a diagram of an uplink-downlink configuration of an 8:2 configuration.

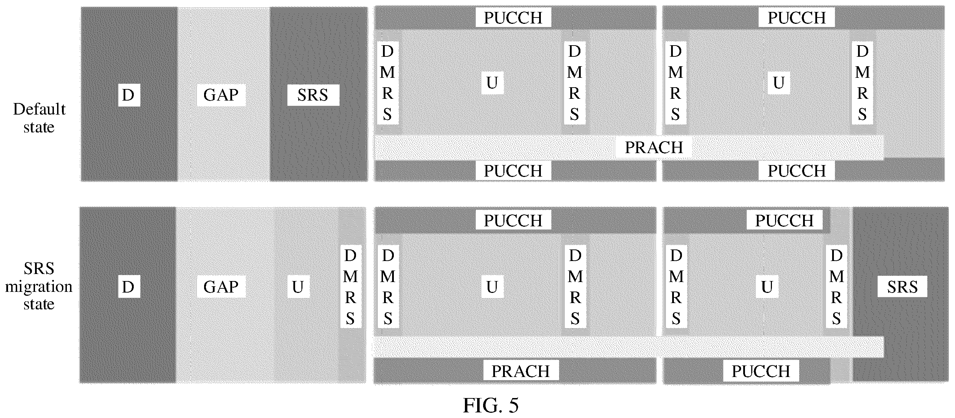

FIG. 5 shows a detailed diagram of channels included after the S slot and the U slot are expanded before and after SRS migration. In a default state in FIG. 5, in a diagram of the channels included in the S slot and the U slot before the SRS migration, it may be learned that the SRS is transmitted in the S slot. In an SRS migration state, in a diagram of the channels included in the S slot and the U slot after the SRS migration, it may be learned that the SRS is transmitted in the U slot.

### Embodiment 1

The following describes an overall design and process of an SRS migration and avoidance solution triggered based on remote interference identification.
(1) The design and the process of the solution based on the interference identification are shown in the following figure.

In this application, a base station identifies remote interference on a UL symbol, and needs to adjust a channel configuration manner of a cell based on the interference. However, for an online user in the cell, it is impossible to schedule two channel structures shown in FIG. 5 in one cell at the same time.

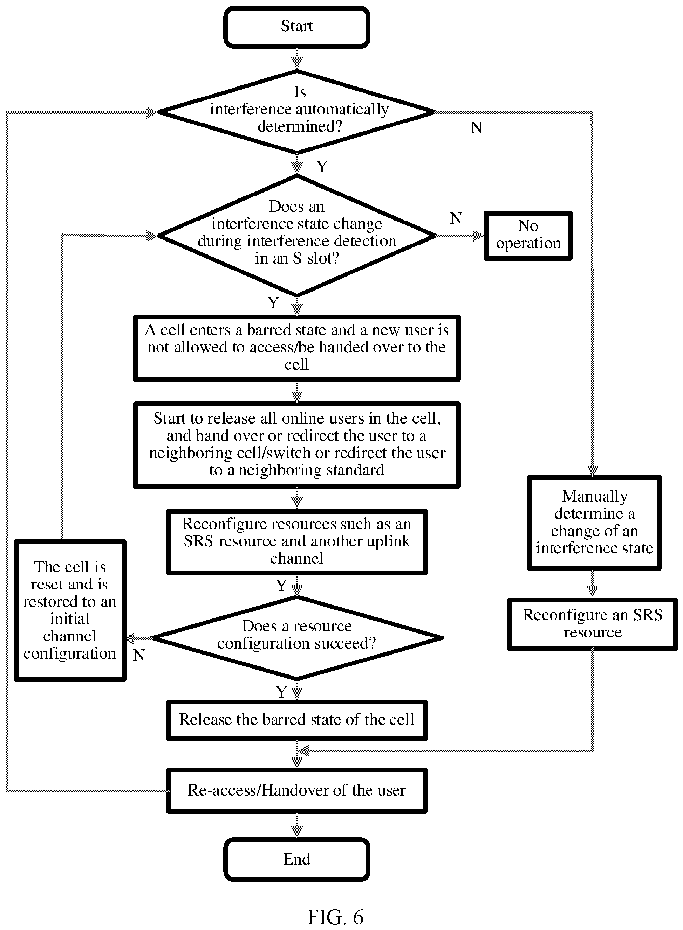

Therefore, a migration process shown in FIG. 6 is designed in this application. Based on the migration process in this application, it may be ensured that the online user is not directly interrupted, and a manner in which the user is redirected and migrated and then the user performs re-access after resource adjustment is used for implementation.

FIG. 6 is a diagram of the SRS migration process according to this application.

Step 1: Detect and determine interference. At an interfered end, an interference level and a characteristic of an uplink symbol of a gNodeB are determined, and if an interference state changes from an interference-free state to an interfered state, an interference characteristic presents a "slope" characteristic, that is, an interference level of a left symbol is higher than an interference level of a right symbol, so that a determining result of remote interference to the gNodeB is obtained. The detection and determining may be implemented based on a gNodeB algorithm. Alternatively, whether interference changes may be manually determined based on a statistical result on the uplink symbol.

When whether the interference changes is manually determined (in correspondence to a branch in which automatic interference determining is not performed), if it is subsequently manually determined that the remote interference occurs, an SRS resource may be manually reconfigured (for example, through a network management device). When the detection and determining may be implemented based on the gNodeB algorithm (in correspondence to a branch in which automatic interference determining is performed), the following steps 2 to 4 may be subsequently performed.

Step 2: Bar a cell and release an online user. The cell enters a barred state and a new user is not allowed to access/be handed over to the cell. All online users start to be released in the cell, and the user is handed over or redirected to a neighboring cell/the user is switched or redirected to a neighboring standard to prepare for channel adjustment in the following steps.

Step 3: Reconfigure a channel structure such as an SRS channel and a location. An SRS is dynamically adjusted to a corresponding location.

Step 4: Release the barred state of the cell and enable the user to re-access the cell. After the channel structure is adjusted, the cell is released from the barred state, and the user is automatically migrated back to the cell based on mobility. In this case, the adjustment is completed.

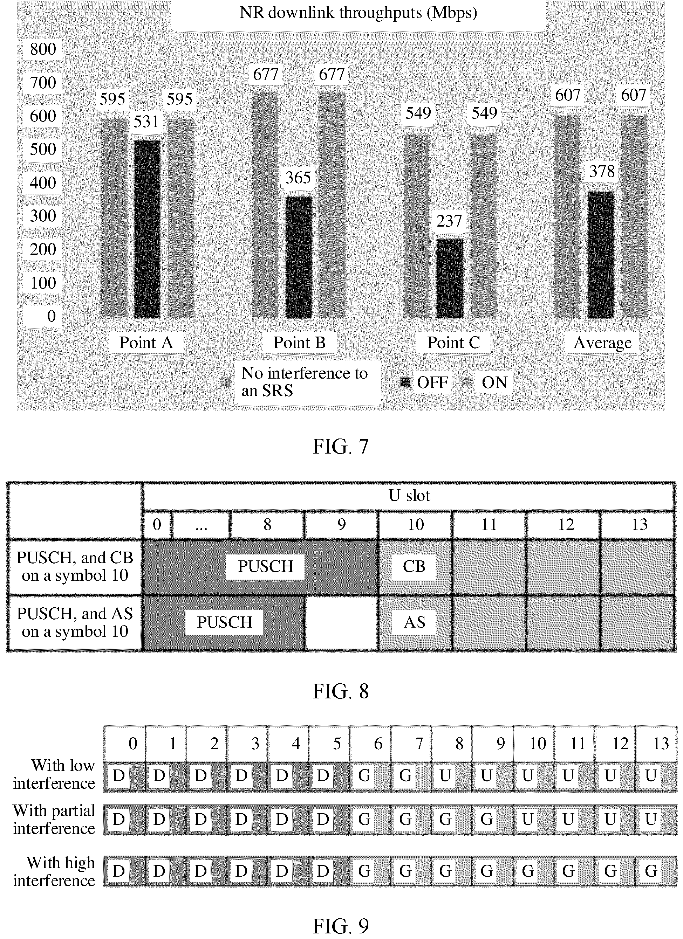

In this way, this application provides a method for avoiding remote interference by migrating an SRS after interference is identified, to migrate an SRS channel to a location with low interference through interference identification, and reduce interference to the SRS. After interference to the SRS channel is reduced, a BF beam is more accurate, a beam signal-to-noise ratio of UE is improved, and performance such as a downlink throughput is improved. Downlink throughputs (NR Downlink Throughputs) obtained before and after the method in this application is applied are shown in FIG. 7. It may be learned that, after the method in this application is applied, the downlink throughput may be basically the same as a downlink throughput obtained when there is no interference to the SRS.

### Embodiment 2

Based on Embodiment 1, Embodiment 2 provides a solution in which a switching symbol is not reserved for an antenna selection terminal between a PUSCH and an SRS when the SRS is allocated in a U slot.

Specifically, during switching between the PUSCH and the SRS, antenna switching may occur, antenna switching time needs to be reserved, and in a conventional solution, one symbol needs to be reserved for protection, as shown in FIG. 8. In the solution in Embodiment 2, a CB SRS is preferentially allocated on an initial symbol. In this way, the antenna selection terminal does not need to reserve the antenna switching time during switching between the PUSCH and the SRS, so that overheads of one symbol can be reduced.

In the conventional technology, the SRS and the PUSCH are in a same slot. For the antenna selection terminal, because dynamic AS allocation is performed on different symbols, one symbol needs to be reserved for antenna switching protection during the AS allocation. Based on Embodiment 2, an AS/CB SRS allocation manner is optimized, and the CB SRS is preferentially allocated on the initial symbol adjacent to the PUSCH, so that a guard symbol for antenna switching does not need to be fixedly reserved. Based on Embodiment 2, antenna selection UE does not need to reserve the antenna switching time for switching between the PUSCH and SRS, to reduce the overheads of one symbol. A quantity of symbols occupied by the PUSCH is reduced by 1, and the overheads are reduced by approximately 2% to 4% (depending on different configurations).

### Embodiment 3

Based on Embodiment 1 and/or Embodiment 2, Embodiment 3 provides a method for scheduling a PUSCH in an S slot based on interference after an SRS is migrated from the S slot to a U slot.

A feasible manner is specifically as follows:
After SRS migration, the SRS occupies a GAP symbol in the S slot to schedule U. However, interference may affect some symbols and only a low-interference symbol may be occupied.

For example, there may be three configurations shown in FIG. 9 for symbols in the S slot in Embodiment 3. In a configuration shown in a 1^{st} row, G symbols 7 and 8 and an original SRS symbol may be occupied for transmission of an uplink signal, and the configuration may be referred to as a "highest level"; in a configuration shown in a 2^{nd} row, an original SRS symbol may be occupied for transmission of an uplink signal, and the configuration may be referred to as a "middle level"; and in a configuration shown in a 3^{rd} row, a G symbol and an original SRS symbol cannot be occupied for transmission of an uplink signal, and the configuration may be referred to as a "shortest level". In a case of low interference, the configuration shown in the 1^{st} row may be used; in a case of partial interference, the configuration shown in the middle row may be used; and in a case of high interference, the configuration shown in the third row may be used.

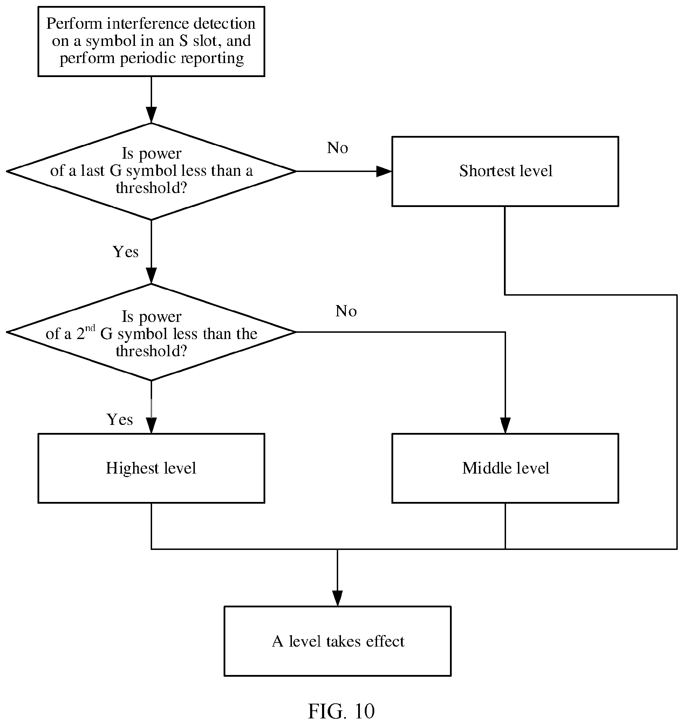

To achieve the effect shown in FIG. 3, a base station may perform a process shown in FIG. 10.

FIG. 10 is a flowchart of flexibly configuring an original SRS symbol and a G symbol by the base station.

As shown in FIG. 10, the base station performs interference detection on a symbol in an S slot, and performs periodic reporting. When power of a last G symbol (that is, a symbol 9) in the S slot is greater than or equal to a threshold, it is determined that the "shortest level" is to be used; or when power of a last G symbol in the S slot is less than a threshold, whether power of a 2^{nd} G symbol (that is, a symbol 7) in the S slot is less than the threshold may be further determined, and when the power of the 2^{nd} G symbol (that is, the symbol 7) in the S slot is greater than or equal to the threshold, it is determined that the "middle level" is to be used, or when the power of the 2^{nd} G symbol (that is, the symbol 7) in the S slot is less than the threshold, it is determined that the "highest level" is to be used. After a configuration of the symbols in the S slot is determined, the S slot may be scheduled for a level notification module based on a corresponding level (that is, the level takes effect).

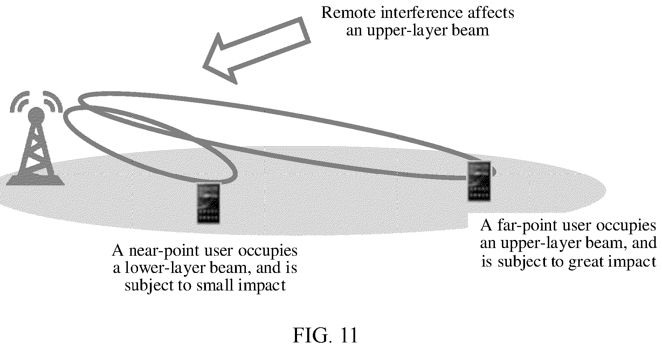

Another feasible manner is specifically as follows:
As shown in FIG. 11, remote interference is more likely to affect an upper-layer beam, and has smaller impact on a lower-layer beam than on the upper-layer beam. However, a near-point user usually occupies the lower-layer beam, and a far-point user usually occupies the upper-layer beam. Therefore, the remote interference has small impact on the near-point user, and has great impact on the far-point user. When an S slot is interfered with, the far-point user is subject to greatest impact, and the near-point user may still be scheduled. The near-point user is expected to make full use of a high-interference symbol.

Based on this, the base station may determine a configuration of symbols in the S slot based on a distance between the user and the base station. For example, for the near-point user, the "highest level" shown in FIG. 9 may be used; for a middle-point user, the "middle level" shown in FIG. 9 may be used; and for the far-point user, the "shortest level" may be used.

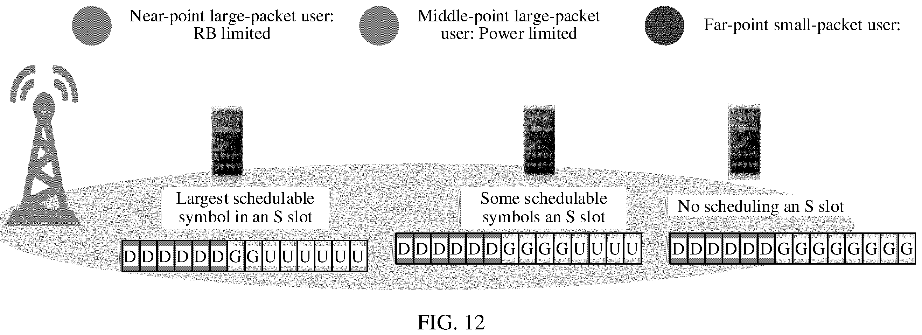

For example, FIG. 12 shows an example in which the base station may determine the configuration of the symbols in the S slot based on the distance between the user and the base station. As shown in FIG. 12, the "highest level" shown in FIG. 9 may be used for a near-point large-packet user, the "middle level" shown in FIG. 9 may be used for a middle-point large-packet user, and the "shortest level" may be used for a far-point small-packet user.

In this way, based on Embodiment 3, a length of the symbol in the S slot may be adjusted more flexibly based on interference information and based on different interference degrees, so that the uplink symbol can be used to the maximum extent, to improve PUSCH resource and improve uplink performance.

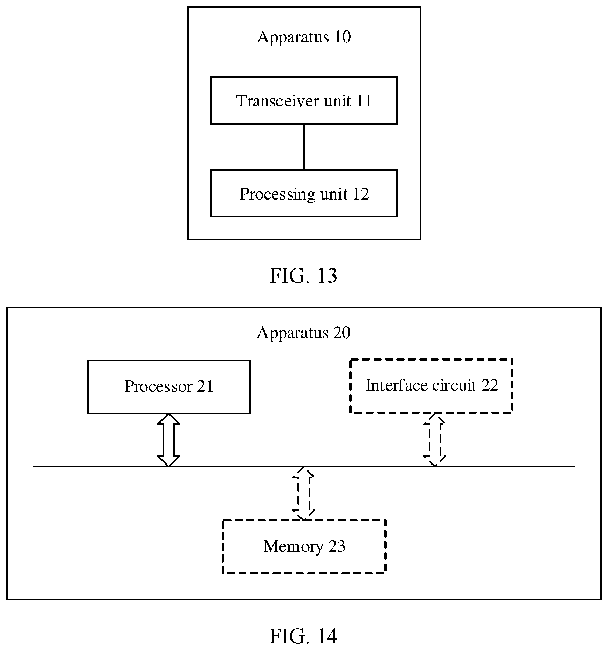

The foregoing describes in detail the method provided in this application with reference to FIG. 2 to FIG. 12. The following describes in detail embodiments of apparatuses of this application with reference to FIG. 13 and FIG. 14.

It may be understood that, to implement functions in the foregoing embodiments, the apparatus in FIG. 13 or FIG. 14 includes corresponding hardware structures and/or software modules for performing the functions. A person skilled in the art should be easily aware that, in this application, the units and the method steps in the examples described with reference to embodiments disclosed in this application can be implemented by hardware or a combination of hardware and computer software.

FIG. 13 and FIG. 14 are diagrams of structures of possible apparatuses according to embodiments of this application. These apparatuses may be configured to implement functions of the access network device in the foregoing method embodiments, and therefore may also achieve beneficial effects of the foregoing method embodiments.

As shown in FIG. 13, the apparatus 10 includes a transceiver unit 11 and a processing unit 12. The transceiver unit 11 may implement a corresponding communication function, and the processing unit 12 is configured to process data. The transceiver unit 11 may also be referred to as a communication interface or a communication unit.

Optionally, the apparatus 10 may further include a storage unit (not shown in FIG. 13). The storage unit may be configured to store instructions and/or data. The processing unit 12 may read the instructions and/or the data in the storage unit, to enable the apparatus to implement the foregoing method embodiments.

The apparatus 10 may be configured to perform actions performed by the access network device in the foregoing method embodiments. In this case, the apparatus 10 may be the access network device or a component that may be disposed in the access network device. The transceiver unit 11 is configured to perform receiving and sending related operations of the access network device in the foregoing method embodiments, and the processing unit 12 is configured to perform a processing related operation of the access network device in the foregoing method embodiments.

In a design, when the apparatus 10 is configured to implement the functions of the access network device in the foregoing method embodiments, the processing unit 12 is configured to: determine first information when remote interference is detected, where the first information is used to configure a time domain resource of a sounding reference signal SRS to be migrated from a first time domain resource to a second time domain resource, and strength of remote interference on the second time domain resource is less than strength of remote interference on the first time domain resource; and the transceiver unit 11 is configured to send the first information to a terminal.

Optionally, before the first information is sent to the terminal, the processing unit 12 is further configured to: set a first cell in which the terminal is located to a barred barred state; and migrate all terminals in the first cell to a second cell. The transceiver unit 11 is specifically configured to send the first information to the terminal when the terminal re-accesses the first cell.

Optionally, the second cell is a neighboring cell of the first cell, and/or the second cell and the first cell are cells of different standards.

Optionally, a 1^{st} symbol of the second time domain resource is adjacent to a last symbol of a third time domain resource used for transmission of a physical uplink shared channel PUSCH, the 1^{st} symbol of the second time domain resource is used for transmission of a first SRS, and the first SRS is an SRS for which an antenna is not switched when the terminal switches from the PUSCH to the first SRS.

Optionally, the first SRS is used to determine a codebook CB-based PUSCH transmission mode.

Optionally, the transceiver unit 11 is further configured to send second information to the terminal based on strength of remote interference on a fourth time domain resource, where the second information is used to schedule the fourth time domain resource, and the fourth time domain resource includes the first time domain resource and guard period symbols in a slot in which the first time domain resource is located.

Optionally, the first time domain resource is after the guard period symbol. When strength of remote interference on a last symbol in the guard period symbols is greater than a preset threshold, the second information is used to schedule the terminal to skip transmission of a physical uplink shared channel PUSCH on the first time domain resource and the guard period symbol; when strength of remote interference on a last symbol in the guard period symbols is less than a preset threshold, and strength of remote interference on a first symbol in the guard period symbols is greater than the preset threshold, the second information is used to schedule the terminal for transmission of a PUSCH on the first time domain resource and skip transmission of a PUSCH on the guard period symbol; or when strength of remote interference on a first symbol in the guard period symbols is less than a preset threshold, the second information is used to schedule the terminal for transmission of a PUSCH on the first time domain resource and a symbol after a 2^{nd} symbol in the guard period symbols.

Optionally, the transceiver unit 11 is further configured to: send second information to the terminal based on a distance between the terminal and the access network device, where the second information is used to schedule a fourth time domain resource, and the fourth time domain resource includes the first time domain resource and guard period symbols in a slot in which the first time domain resource is located.

Optionally, when the terminal is a near-point terminal, the second information is used to schedule the terminal for transmission of a physical uplink shared channel PUSCH on the first time domain resource and a part of the guard period symbols; when the terminal is a midpoint terminal, the second information is used to schedule the terminal for transmission of a PUSCH on the first time domain resource and skip transmission of a PUSCH on the guard period symbol; or when the terminal is a far-point terminal, the second information is used to schedule the terminal to skip transmission of a PUSCH on the first time domain resource and the guard period symbol.

Optionally, the processing unit 12 is further configured to determine the second information based on strength of remote interference on the fourth time domain resource.

For more detailed descriptions of the transceiver unit 710 and the processing unit 720, refer to related descriptions in the foregoing method embodiment. Details are not described herein again.

As shown in FIG. 14, the apparatus 20 includes a processor 21. The processor 21 is coupled to a memory 23, and the memory 23 is configured to store instructions. When the apparatus 20 is configured to implement the foregoing method, the processor 21 is configured to execute the instructions in the memory 23, to implement a function of the foregoing processing unit 12.

Optionally, the apparatus 20 further includes the memory 23.

Optionally, the apparatus 20 further includes an interface circuit 22. The processor 21 and the interface circuit 22 are coupled to each other. It may be understood that the interface circuit 22 may be a transceiver or an input/output interface. When the apparatus 20 is configured to implement the foregoing method, the processor 21 is configured to execute the instructions to implement the function of the foregoing processing unit 12, and the interface circuit 22 is configured to implement a function of the foregoing transceiver unit 11.

For example, when the apparatus 20 is a chip used in an access network device, the chip implements the functions of the access network device in the foregoing method embodiments. The chip receives information from another module (for example, a radio frequency module or an antenna) in the access network device, where the information is sent by another apparatus to the access network device. Alternatively, the chip sends information to another module (for example, a radio frequency module or an antenna) in the access network device, where the information is sent by the access network device to another apparatus.

This application further provides a communication apparatus, including a processor. The processor is coupled to a memory. The memory is configured to store a computer program or instructions and/or data. The processor is configured to: execute the computer program or the instructions stored in the memory, or read the data stored in the memory, to perform the method in the foregoing method embodiments. Optionally, there are one or more processors. Optionally, the communication apparatus includes the memory. Optionally, there are one or more memories. Optionally, the memory and the processor are integrated together or disposed separately.

This application further provides a computer-readable storage medium. The computer-readable storage medium stores computer instructions for implementing the method performed by the access network device in the foregoing method embodiments.

This application further provides a computer program product, including instructions. When the instructions are executed by a computer, the method performed by the access network device in the foregoing method embodiments is implemented.

This application further provides a communication system. The communication system includes the access network device in the foregoing embodiments.

For explanations and beneficial effects of related content in any one of the foregoing provided apparatuses, refer to the corresponding method embodiments provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device. Certainly, the processor and the storage medium may alternatively exist in the access network device as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, all or some of the procedures or the functions described in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence. The execution sequence of the processes should be determined based on functions and internal logic of the processes.

Unless otherwise stated, meanings of all technical and scientific terms used in embodiments of this application are the same as those usually understood by a person skilled in the technical field of this application. The terms used in this application are merely intended to describe objectives of specific embodiments, and are not intended to limit the scope of this application. It should be understood that the foregoing is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
determining, by an access network device, first information when remote interference is detected, wherein the first information is used to configure a time domain resource of a sounding reference signal SRS to be migrated from a first time domain resource to a second time domain resource, and strength of remote interference on the second time domain resource is less than strength of remote interference on the first time domain resource; and
sending, by the access network device, the first information to a terminal.

2. The method according to claim 1, wherein
before the sending, by the access network device, the first information to a terminal, the method further comprises:
setting, by the access network device, a first cell in which the terminal is located to a barred barred state; and
migrating, by the access network device, all terminals in the first cell to a second cell; and
the sending, by the access network device, the first information to a terminal comprises:
sending, by the access network device, the first information to the terminal when the terminal re-accesses the first cell.

3. The method according to claim 2, wherein
the second cell is a neighboring cell of the first cell, and/or the second cell and the first cell are cells of different standards.

4. The method according to any one of claims 1 to 3, wherein
a 1^{st} symbol of the second time domain resource is adjacent to a last symbol of a third time domain resource used for transmission of a physical uplink shared channel PUSCH, the 1^{st} symbol of the second time domain resource is used for transmission of a first SRS, and the first SRS is an SRS for which an antenna is not switched when the terminal switches from the PUSCH to the first SRS.

5. The method according to claim 4, wherein
the first SRS is used to determine a codebook CB-based PUSCH transmission mode based on a.

6. The method according to any one of claims 1 to 5, wherein the method further comprises:
sending, by the access network device, second information to the terminal based on strength of remote interference on a fourth time domain resource, wherein the second information is used to schedule the fourth time domain resource, and the fourth time domain resource comprises the first time domain resource and guard period symbols in a slot in which the first time domain resource is located.

7. The method according to claim 6, wherein
the first time domain resource is after the guard period symbol;
when strength of remote interference on a last symbol in the guard period symbols is greater than a preset threshold, the second information is used to schedule the terminal to skip transmission of a physical uplink shared channel PUSCH on the first time domain resource and the guard period symbol;
when strength of remote interference on a last symbol in the guard period symbols is less than a preset threshold, and strength of remote interference on a first symbol in the guard period symbols is greater than the preset threshold, the second information is used to schedule the terminal for transmission of a PUSCH on the first time domain resource and skip transmission of a PUSCH on the guard period symbol; or
when strength of remote interference on a first symbol in the guard period symbols is less than a preset threshold, the second information is used to schedule the terminal for transmission of a PUSCH on the first time domain resource and a symbol after the 2^{nd} symbol in the guard period symbols.

8. The method according to any one of claims 1 to 5, wherein the method further comprises:
sending, by the access network device, second information to the terminal based on a distance between the terminal and the access network device, wherein the second information is used to schedule a fourth time domain resource, and the fourth time domain resource comprises the first time domain resource and guard period symbols in a slot in which the first time domain resource is located.

9. The method according to claim 8, wherein
when the terminal is a near-point terminal, the second information is used to schedule the terminal for transmission of a physical uplink shared channel PUSCH on the first time domain resource and a part of the guard period symbols;
when the terminal is a midpoint terminal, the second information is used to schedule the terminal for transmission of a PUSCH on the first time domain resource and skip transmission of a PUSCH on the guard period symbol; or
when the terminal is a far-point terminal, the second information is used to schedule the terminal to skip transmission of a PUSCH on the first time domain resource and the guard period symbol.

10. The method according to claim 8 or 9, wherein the method further comprises:
determining, by the access network device, the second information based on strength of remote interference on the fourth time domain resource.

11. A communication apparatus, comprising:
a processor, configured to execute a computer program stored in a memory, to enable the apparatus to perform the method according to any one of claims 1 to 10.

12. The apparatus according to claim 11, wherein the apparatus further comprises the memory.

13. A computer-readable storage medium, wherein the computer-readable storage medium stores a computer program, and when the computer program is run on a computer, the computer is enabled to perform the method according to any one of claims 1 to 10.

14. A computer program product, wherein the computer program product comprises instructions for performing the method according to any one of claims 1 to 10.

15. A communication system, comprising: an access network device configured to perform the method according to any one of claims 1 to 10.
